# FASCICULE DE BREVET EUROPEEN

(11) **EP 3 059 811 B1**
(45) Date de publication et mention de la délivrance du brevet: **12.12.2018**
(21) Numéro de dépôt: 16155808.5
(22) Date de dépôt: 16.02.2016
(51) Int. Cl.: H01R 13/622, H02G 3/32, F16B 7/18

(54) **SYSTEME MODULAIRE**
MODULSYSTEM
MODULAR SYSTEM

(30) Priorité: 17.02.2015 FR 1551333
(43) Date de publication de la demande: 24.08.2016
(73) Titulaire: Amphenol Socapex, 74300 Thyez (FR)
(72) Inventeur: Gimenes, Jean-Paul, 74950 Scionzier (FR); Barbosa, Jean-Paul, 74190 Passy (FR)
(74) Mandataire: Calvo de Nó, Rodrigo

(56) Documents cités:
- DE-A1- 1 650 019
- DE-A1- 2 646 063
- US-A- 4 229 064
- US-A- 5 993 266
- US-A1- 2010 236 030

## Description

La présente invention concerne un système et un procédé pour l'assemblage d'un raccord modulaire. Dans ce contexte, on entend par « raccord » une pièce qui permet de raccorder au moins mécaniquement deux autres éléments.

On utilise, notamment dans l'aéronautique, mais aussi dans d'autres domaines techniques, des raccords pour maintenir mécaniquement des connexions électriques et des câbles, ainsi qu'éventuellement une protection électromagnétique autour de la connexion et/ou le câble. Parmi ces raccords on connaît notamment des raccords combinant un filetage, destiné à coopérer avec un filetage complémentaire pour une fixation axiale, avec une denture frontale, destinée à coopérer avec une denture frontale complémentaire pour empêcher la rotation.

Ces raccords peuvent répondre à une multitude de normes différentes. Dans le domaine aéronautique, par exemple, on connaît notamment les normes EN3660, EN3646, EN2997, EN3645, ABS2216, MIL-DTL-38999, MIL-DTL-83723 et MIL-DTL-85049. Chacune de ces normes peut proposer des paramètres différents pour les interfaces de raccordement, et notamment des dents frontales et des filetages différents. Ceci complique la gestion des inventaires, augmente leur coût et peut aussi provoquer des erreurs de montage dues à la confusion entre raccords différents et incompatibles.

Le document DE 26 46 063 montre un raccord modulaire.

### Objet et résumé de l'invention

La présente divulgation vise à remédier à ces inconvénients, en proposant un système plus versatile pour l'assemblage d'un raccord modulaire pouvant être adapté à une pluralité de normes différentes.

Suivant au moins un mode de réalisation, ce but est atteint grâce au fait que le système comprend un corps principal, un filetage autour d'un axe central, à déplacement restreint par rapport audit corps principal au moins dans une direction parallèle audit axe central, et une pluralité de pièces dentées alternatives aptes à être fixées au corps principal et présentant chacune une denture différente avec au moins une dent frontale en saillie suivant la direction dudit axe central.

Grâce à la disponibilité d'une pluralité de pièces dentées alternatives, présentant chacune une denture différente, il est possible d'adapter un même corps principal du raccord modulaire à une norme parmi plusieurs normes différentes par simple sélection d'une pièce dentée avec la denture appropriée pour cette norme et sa fixation au corps principal. On peut ainsi simplifier la gestion des inventaires, et éviter des erreurs dans l'utilisation des raccords.

Chaque pièce dentée peut notamment prendre la forme d'une bague fendue élastique pour faciliter son montage et sa fixation sur le corps principal du raccord. Toutefois, d'autres formes différentes, comme notamment celle d'une bague non fendue.

Afin de faciliter la fixation des pièces dentées, chacune peut présenter, en sens opposé à ladite dent frontale, au moins un doigt d'indexage apte à coopérer avec un dégagement dans le corps principal de manière à bloquer la pièce dentée en rotation autour de l'axe central par rapport au corps principal. Par ailleurs, elle peut présenter au moins un crochet pour la retenir axialement au corps principal. Toutefois, d'autres moyens de fixation de la pièce dentée sur le corps principal, comme par exemple le rivetage, le soudage, le collage, ou le sertissage, peuvent également être envisagés alternativement ou en complément au doigt d'indexage et/ou au crochet.

Le système peut en particulier être adapté à l'assemblage d'un raccord destiné à être fixé sur un filetage externe. Pour cela, le système peut comprendre au moins un écrou de couplage, ledit filetage étant un filetage interne dudit écrou, et l'écrou étant, par rapport au corps principal, restreint en direction sensiblement parallèle à l'axe central et rotatif autour de l'axe central. Par ailleurs, le système peut non seulement être adaptable à plusieurs dentures frontales différentes, mais aussi à plusieurs filetages différents. Pour cela, le système peut comprendre une pluralité d'écrous de couplage alternatifs, présentant chacun un filetage interne différent. Eventuellement, le système peut aussi comprendre une bague de rétention pour retenir axialement l'écrou par rapport au corps principal. Ainsi, pour assembler un raccord adapté à un certain filetage, un écrou approprié peut être sélectionné et fixé axialement au corps principal.

Le système peut comprendre en outre un collier de serrage pour la fixation du raccord modulaire sur un câble. Les colliers de serrage sont des dispositifs pour assurer une connexion mécanique par compression périphérique obtenue par déformation élastique. Ce collier de serrage peut notamment comprendre un organe pivotant avec une première extrémité apte à être reliée au corps principal par une articulation permettant son pivotement par rapport au corps principal, et un dispositif pour fixer une deuxième extrémité de l'organe pivotant au corps principal après serrage du collier. Le serrage du collier pourra ainsi être effectué par pivotement de l'organe pivotant vers le corps principal, de manière à serrer la pièce à serrer entre l'organe pivotant et le corps principal.

Par ailleurs, afin d'assurer un bon maintien en position du raccord sur le câble tout en permettant une adaptation facile du collier à plusieurs diamètres de serrage, le raccord peut comprendre en outre une bande, en matériau plus souple que l'organe pivotant, solidaire d'une surface interne de l'organe pivotant sur une longueur, et présentant, entre cette longueur et une extrémité de la bande, au moins un marquage correspondant à un diamètre de serrage prédéterminé. Grâce à ces dispositions, la bande souple est rendue solidaire du reste de l'organe pivotant, diminuant ainsi le nombre de pièces distinctes pour simplifier la logistique, tout en pouvant être facilement adaptée à au moins un diamètre de serrage prédéterminé, en coupant par son marquage. Par ailleurs, pour augmenter encore la versatilité du collier, la bande peut présenter une pluralité de marquages correspondant à une pluralité de différents diamètres de serrage prédéterminés.

Toutefois, d'autres formes alternatives sont également envisageables : ainsi, par exemple, un collier avec un organe flexible pourrait être serré autour de son axe central par flexion de cet organe flexible. Alternativement aussi, un organe du collier de serrage pourrait être relié au corps principal autrement que par une articulation et se déplacer vers le corps principal autrement que par pivotement.

Cette divulgation concerne aussi un procédé de montage d'un raccord modulaire à partir du système susmentionné, dans lequel une pièce dentée est sélectionnée, parmi la pluralité de pièces dentées alternatives présentant des dents frontales différentes, pour être complémentaire d'une denture frontale d'un autre raccord auquel le raccord modulaire doit être connecté, avant d'être fixée au corps principal. Ce procédé de montage peut comprendre en outre une étape de sélection d'un écrou de couplage présentant un filetage interne complémentaire d'un filetage externe de l'autre raccord, parmi une pluralité d'écrous alternatifs présentant des filetages différents, et une étape de montage de l'écrou sélectionné sur le corps principal.

### Brève description des dessins

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- la figure 1 est une vue en perspective d'un raccord modulaire assemblé à partir d'un système suivant un premier mode de réalisation ;
- la figure 2 est une vue en perspective d'une pièce dentée du système modulaire de la figure 1 ;
- la figure 3 est une vue de détail de l'avant du raccord modulaire de la figure 1 ;
- la figure 4 est une vue en perspective d'un organe pivotant du collier de serrage de la figure 1 ;
- les figures 5A à 5F sont des vues en perspective de raccords modulaires assemblés à partir de systèmes suivant des modes de réalisation alternatifs ;
- la figure 6 illustre une première étape d'assemblage du raccord modulaire de la figure 1 ;
- la figure 7 illustre une deuxième étape d'assemblage du raccord modulaire de la figure 1 ;
- la figure 8 illustre une étape d'adaptation du collier de serrage de la figure 1 à un diamètre de serrage déterminé ;
- la figure 9 illustre une troisième étape d'assemblage du raccord modulaire de la figure 1 ;
- la figure 10 illustre une première étape de serrage du collier de serrage ;
- la figure 11 illustre une deuxième étape de serrage ;
- la figure 12 illustre une troisième étape de serrage ;
- la figure 13 illustre une première étape de raccordement du raccord modulaire de la figure 1 à un raccord complémentaire ;
- la figure 14 illustre une deuxième étape de raccordement ;
- la figure 15 illustre une troisième étape de raccordement ;
- la figure 16 est une coupe transversale du raccord de la figure 1 ; et
- les figures 17A et 17B illustrent deux dentures frontales alternatives d'un système suivant un mode de réalisation de l'invention.

### Description détaillée de l'invention

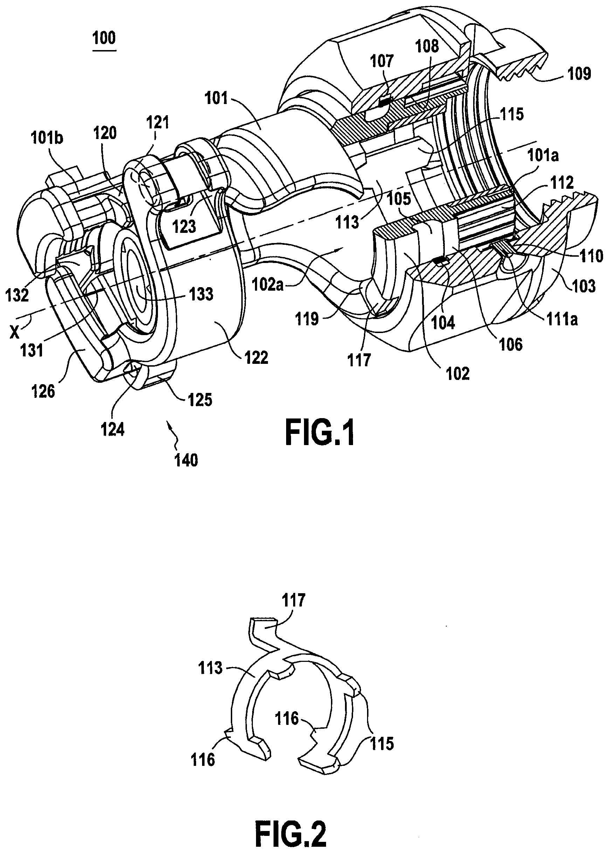

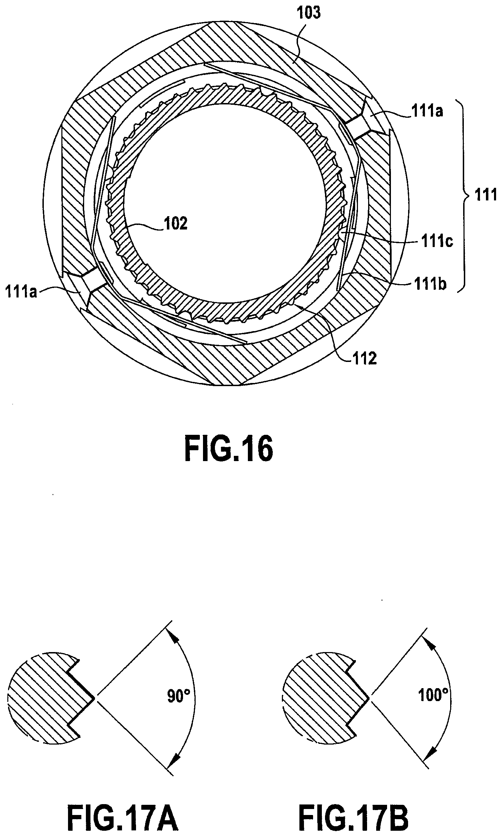

La figure 1 illustre un raccord modulaire 100 comprenant un corps principal 101 avec un manchon 102 présentant un passage central 102a, un écrou de couplage 103, dont le déplacement axial par rapport au corps principal 101 est restreint par une bague fendue élastique 104 coopérant avec une rainure annulaire 105 sur une surface externe 106 du corps principal 101 et une rainure annulaire 107 sur une surface interne 108 de l'écrou 103. Par ailleurs, l'écrou 103 présente aussi un filetage interne 109 sur un segment s'étendant au-delà d'une extrémité avant 101a du corps principal 101, ainsi que deux orifices 110, radiaux, traversants, sur lesquels est fixé des cliquets 111. Comme illustré sur la figure 16, chaque cliquet 111 comprend un rivet 111a de fixation, un ressort 111b et deux bossages 111c sur chaque ressort, ces bossages 111c engageant des rainures longitudinales 112 sur le manchon 102 pour opposer une résistance à la rotation spontanée, due par exemple aux vibrations, de l'écrou 103 par rapport au corps principal 101.

Le raccord modulaire 100 comprend aussi une pièce dentée 113, montée à l'intérieur du manchon 102. Cette pièce dentée 113, qui est illustrée également sur la figure 2, est en forme de bague fendue élastique, afin de permettre son insertion dans le passage central 102a du manchon 102 et comprend plusieurs dents frontales 115 en saillie vers l'avant du raccord 100, distribués autour d'un axe central X du raccord 100. Par ailleurs, elle comporte aussi des doigts d'indexage 116 en saillie en sens opposé, vers l'arrière du raccord 100, ainsi qu'un crochet 117, en saillie aussi vers l'arrière, avec une extrémité distale en saillie radialement vers l'extérieur.

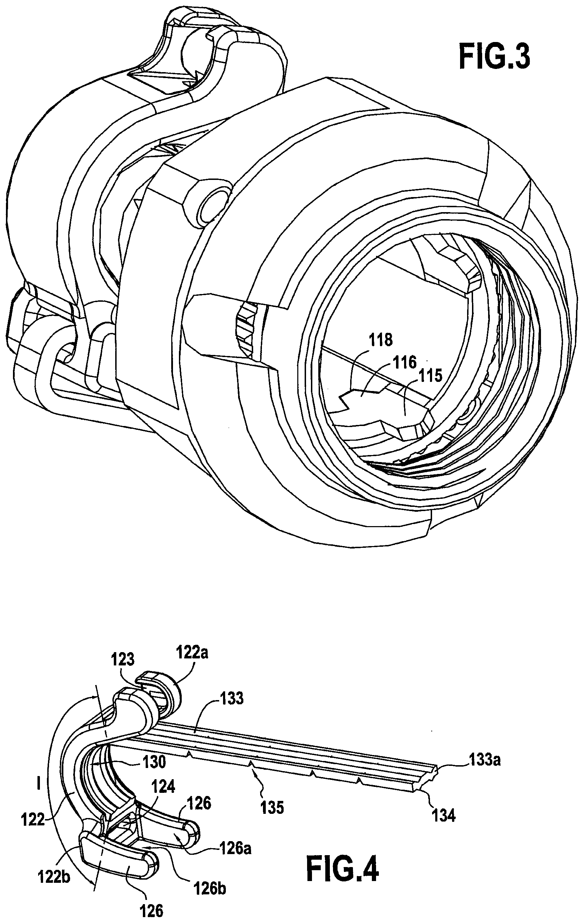

Comme on peut voir sur la figure 3, les doigts d'indexage 116 coopèrent avec des dégagements complémentaires 118 dans une surface interne du passage central 102a du manchon 102 pour empêcher la rotation de la pièce dentée 113, par rapport au corps principal 101, autour de l'axe central X. En outre, l'extrémité distale du crochet 117 pénètre dans une encoche 119 dans la surface interne du passage central 102 pour bloquer la pièce dentée 113 aussi axialement par rapport au corps principal 101. La pièce dentée 113 ainsi reçue contre la surface interne du passage central 102a du manchon 102 est donc fixée par rapport à celui-ci, de manière éventuellement libérable. Le corps principal 101, l'écrou 103, la bague 104, la vis de blocage 111 et la pièce dentée 113 peuvent chacun être en un matériau approprié, tel que par exemple un matériau polymère ou métallique.

Le corps principal 101 se prolonge vers l'arrière au-delà du manchon 102. Un bras 120 s'étend latéralement à partir d'une partie arrière 101b du corps principal 101, et des pivots 121 s'étendent en sens opposés, parallèlement à l'axe central X, à partir d'une extrémité distale de ce bras 120. Le raccord modulaire 100 comprend aussi un organe pivotant 122, monté pivotant, autour d'un axe parallèle à l'axe central X, par rapport à ces pivots 121. Cet organe pivotant 122 peut aussi être réalisé en un matériau tel que, par exemple, un matériau polymère ou métallique. Afin de pouvoir être monté de forme pivotante par rapport au corps principal 101, l'organe pivotant 122 présente, sur une première extrémité 122a, deux glissières 123 semi-ouvertes, disposées en face-à-face de manière à pouvoir recevoir les pivots 121. Toutefois, il serait alternativement envisageable de placer les pivots sur l'organe pivotant 122 et les glissières 123 sur la partie arrière 101b du corps principal. D'autres articulations permettant un pivotement analogue de l'organe pivotant 122 par rapport à la partie arrière 101b du corps principal 101 et connues de la personne du métier peuvent également être considérées. L'organe pivotant 122 forme ainsi un premier organe d'un collier de serrage 140, et la partie arrière 101b du corps principal 101 un deuxième organe de ce collier de serrage 140.

L'organe pivotant 122 présente aussi, sur une deuxième extrémité 122b, opposée à la première extrémité 122a, un orifice 124 pour permettre le passage d'une attache autobloquante 125, qui peut être par exemple une attache à tête d'équerre, ainsi que deux doigts 126, un de chaque côté de l'orifice 124, présentant des surfaces 126a,126b opposées suivant une direction parallèle à l'axe central X. Entre sa première et sa deuxième extrémité 122a,122b, l'organe pivotant 122 présente aussi une face concave 130 face à la partie arrière 101b du corps principal 101, qui présente un autre orifice 131 pour le passage de l'attache 125 et une face également concave 132, entre cet orifice 131 et les pivots 121, face à l'organe pivotant 122. Ainsi, l'attache 125 peut assurer le blocage de l'organe pivotant 122 par rapport à la partie arrière 101b du corps principal 101. Toutefois, d'autres dispositifs de blocage peuvent aussi être alternativement envisagés. Par ailleurs, dans le mode de réalisation illustré, l'orifice 131 est formé dans une partie solide 132 du corps principal 101, destinée à être reçue entre les surfaces 126a,126b lors du pivotement de l'organe pivotant 122 vers la face concave 132 du corps principal 101, de manière à transmettre des efforts axiaux entre l'organe pivotant 122 et le corps principal 101.

Comme on peut notamment voir sur la figure 4, une bande 133, en matériau plus souple que l'organe pivotant 122, est surmoulée sur une certaine longueur I sur la face concave 130 de l'organe pivotant 122, mais s'étend au-delà de cette longueur I jusqu'à une extrémité 133a. Cette bande 133 présente deux nervures longitudinales 134 en V, orientées ainsi dans un plan perpendiculaire à l'axe central X, mais aussi, entre la longueur I surmoulée sur la face concave 130 de l'organe pivotant 122 et l'extrémité 133a, des marquages 135 en forme d'encoches transversales, orientées donc parallèlement à l'axe central X, et dont les positions correspondent à plusieurs diamètres de serrage prédéfinis. Le matériau de la bande 133 peut être un matériau polymère, et notamment un matériau polymère comprenant au moins une polysiloxane. Ainsi, l'organe pivotant 122 forme, avec l'extrémité arrière 101b du corps principal 101, la bande 133 et l'attache autobloquante 125, un collier de serrage 140 autour de l'axe central X du raccord 100.

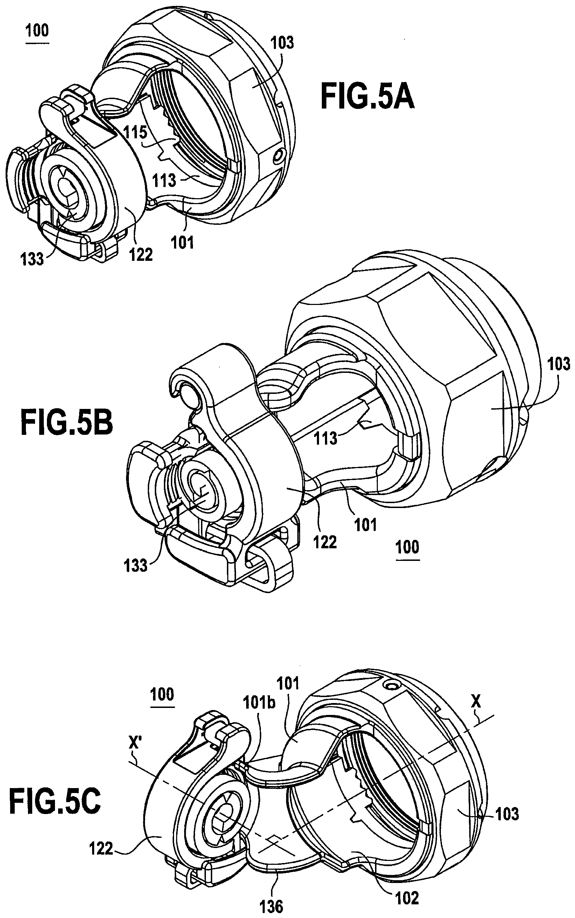

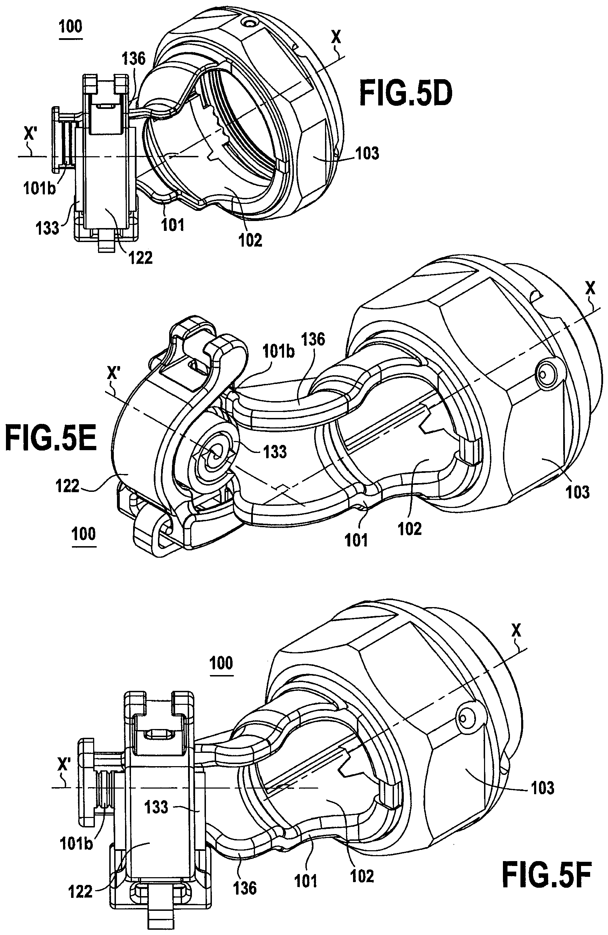

Comme illustré sur les modes de réalisation alternatifs illustrés sur les figures 5A à 5F, pour lesquels les éléments équivalents à ceux du premier mode de réalisation reçoivent les mêmes repères sur les figures, les dimensions et proportions des éléments du raccord 100 peuvent varier. Par ailleurs, sur la pièce dentée 113, les dents frontales 115 peuvent être groupées dans des ensembles de plusieurs dents 115 adjacentes, comme visible sur les figures 5A, 5C et 5D. En outre, il est également envisageable, comme illustré sur les figures 5C à 5F, que le collier de serrage 140 soit orienté suivant un axe X' différent de l'axe central X du raccord 100, grâce à un coude 136 entre le manchon 102 et la partie arrière 101b du corps principal 101. Dans ces modes de réalisation, l'axe de pivotement de l'organe pivotant 122 et les marquages 135 sont parallèles à l'axe central X' du collier de serrage 140, et les nervures longitudinales 134 sont orientées dans un plan perpendiculaire à l'axe central X' du collier de serrage 140.

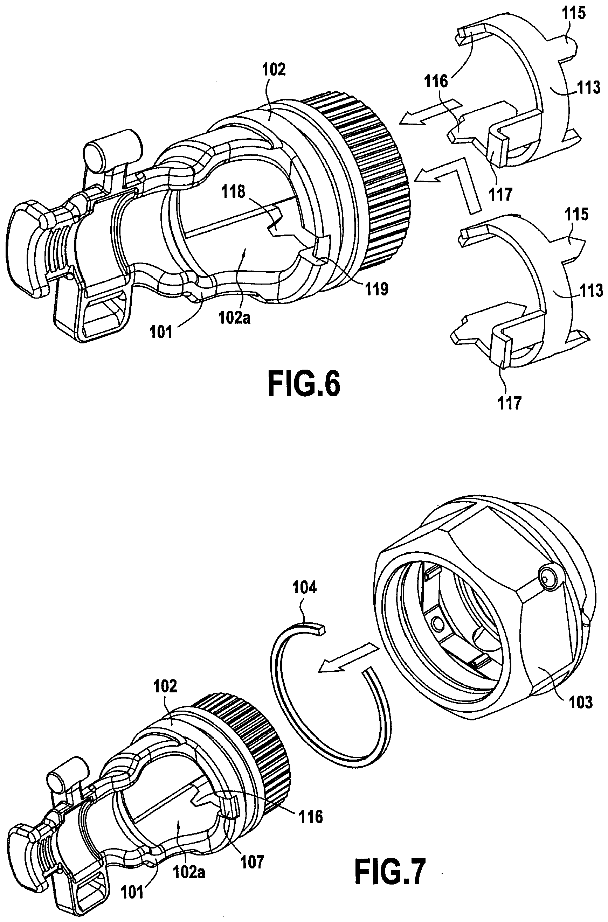

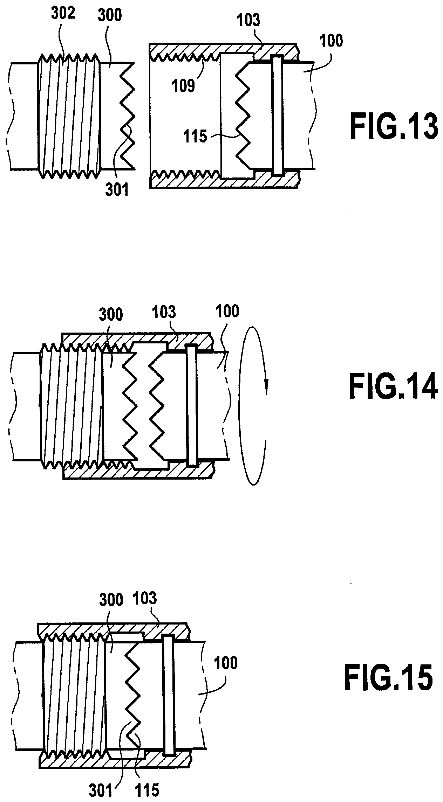

L'assemblage du raccord modulaire 100, sa fixation sur un câble 200 et son raccordement à un autre raccord 300, seront désormais décrites en référant aux figures 6 à 16. Lors du raccordement de ce raccord modulaire 100 à l'autre raccord 300, les dents frontales 115 du raccord modulaire 100 vont engager des dents frontales opposées 301 de l'autre raccord 300, pour bloquer leur rotation relative, comme illustré sur la figure 15. Or, selon la norme et les dimensions de l'autre raccord 300, la forme et les dimensions de ses dents frontales 301 peuvent varier. Par exemple, certaines normes imposent des dents triangulaires avec un angle α (ALPHA) de 90° entre leurs flancs, comme illustré sur la figure 17A, tandis que d'autres normes imposent un angle α (ALPHA) de 100°, comme illustré sur la figure 17B.

Un système pour l'assemblage du raccord 100 peut donc comprendre, à part le corps principal 101, une pluralité de pièces dentées alternatives présentant des dentures différentes, comme illustré sur les figures 17A et 17B. Dans une première étape illustrée sur la figure 6, afin d'adapter le raccord 100 aux dents frontales 301 de l'autre raccord 300, on sélectionne donc, parmi cette pluralité de pièces dentées alternatives présentant des dents frontales différentes, une pièce dentée 113 avec des dents frontales 115 compatibles avec les dents frontales 301 de l'autre raccord 300, et on procède à introduire la pièce dentée 113 sélectionnée dans le passage central 102a du manchon 102 pour la fixer contre la surface interne du passage central 102a du manchon 102, avec ses doigts d'indexage 116 dans les dégagements complémentaires 118 et l'extrémité distale du crochet 117 dans l'encoche 119.

Lors du raccordement du raccord modulaire 100 à l'autre raccord 300, le filetage interne 109 de l'écrou 103 va engager un filetage externe 302 de l'autre raccord 300 pour fixer axialement le raccord modulaire 100 à l'autre raccord 300, comme illustré sur la figure 14. Or, selon la norme et les dimensions de l'autre raccord 300, la forme et les dimensions de son filetage externe 302 peuvent varier aussi. Par exemple, certains raccords peuvent présenter des filetages métriques, tandis que d'autres raccords peuvent avoir des filetages à pas et dimensions non métriques.

Ainsi, le système pour l'assemblage du raccord 100 peut aussi comprendre une pluralité d'écrous alternatifs présentant des filetages différents, et dans une deuxième étape illustrée sur la figure 7, afin d'adapter le raccord 100 au filetage externe 302 de l'autre raccord 300, on sélectionne donc, parmi une pluralité d'écrous alternatifs présentant des filetages différents, un écrou 103 présentant un filetage interne 109 complémentaire du filetage externe 302 de l'autre raccord 303, et on procède à monter cet écrou 103 sur le manchon 102, en restreignant son déplacement axial avec la bague fendue élastique 104.

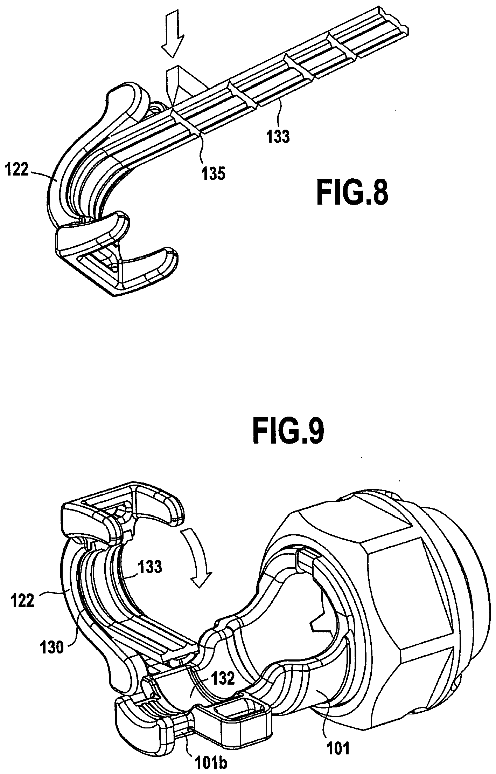

Lors de la fixation du raccord 100 sur le câble 200, la bande souple 133 va entourer le pourtour du câble 200, l'épousant étroitement de manière à assurer un bon maintien en position du câble 200 dans le collier 135. Afin d'assurer aussi un centrage précis du câble 200 dans le collier 135, la longueur de la bande 133 peut être adaptée au diamètre de serrage du câble 200 en coupant la bande 133 par un marquage correspondant parmi les marquages 135, comme illustré sur la figure 8.

L'organe pivotant 122 peut être monté sur la partie arrière 101b du corps principal 101, avant ou après avoir coupé la bande souple 133 par l'un des marquages 135, en introduisant les pivots 121 dans les glissières 123, pour compléter l'assemblage du raccord 100, comme illustré sur la figure 9.

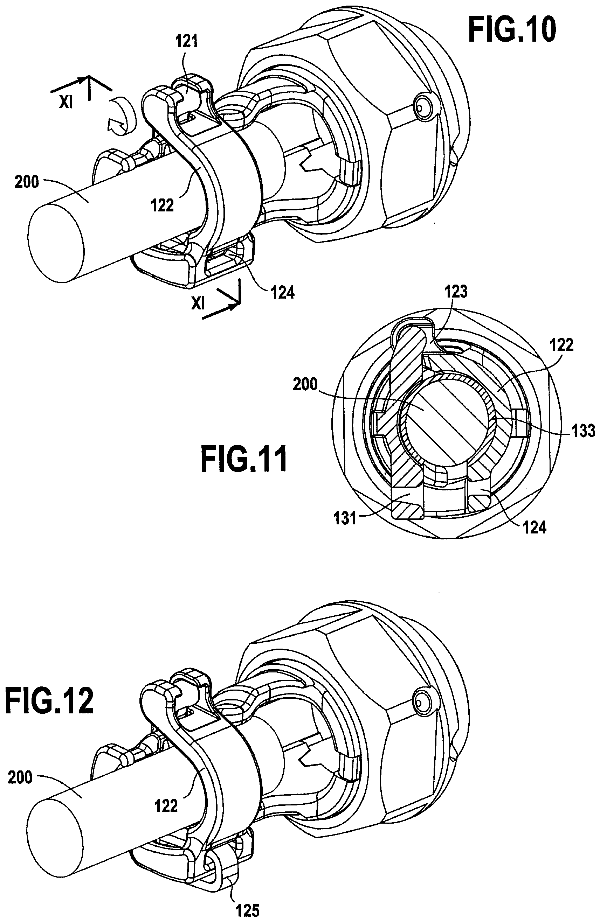

Ensuite, pour fixer le raccord 100 sur le câble 200, l'organe pivotant 122 va être pivoté, autour de l'axe des pivots 121, vers la face concave 132 de la partie arrière 101b du corps principal 101 du raccord 100, comme illustré sur la figure 10, de manière à serrer le câble 200 entre les faces concaves 130 et 132, la bande souple 133 épousant étroitement le contour transversal du câble 200, interposée entre ce contour et chacune des faces concaves 130 et 132, comme illustré sur la figure 11. Ensuite, une attache autobloquante 125 est introduite à travers les orifices 124, 131 et bloquée de manière à maintenir le serrage du câble 200 dans le collier de serrage 140, comme illustré sur la figure 12.

Pour ensuite raccorder le raccord modulaire 100 à l'autre raccord 300, on place d'abord les deux raccords 100,300 face à face, comme illustré sur la figure 13, on procède ensuite à engager le filetage interne 109 de l'écrou 103 sur le filetage externe 302 de l'autre raccord 300, et tourner l'écrou 103, comme illustré sur la figure 14, jusqu'à ce que les dents frontales 115 du raccord modulaire 100 butent contre les dents frontales opposées 301 de l'autre raccord 300, comme illustré sur la figure 15, fixant ainsi les deux raccords 100,300 l'un par rapport à l'autre axialement et en rotation. Finalement, comme illustré sur la figure 16, le cliquet 111 assure le maintien en position angulaire de l'écrou 103 par rapport aux rainures longitudinales 112.

Bien sûr, les raccords suivant les modes de réalisation alternatifs illustrés sur les figures 5A à 5F, peuvent être assemblés, fixés et raccordés de manière analogue.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par ailleurs, un collier de serrage analogue peut être utilisé indépendamment d'un tel raccord, et la modularité du raccord ne précise pas non plus l'utilisation d'un tel collier de serrage. Par conséquent, la description et les dessins doivent être considérés dans un sens illustratif plutôt que restrictif.

## Revendications

1. Système pour l'assemblage d'un raccord modulaire (100), ledit système comprenant :
un corps principal (101) ;
un filetage (109) autour d'un axe central (X), à déplacement restreint par rapport audit corps principal (101) au moins dans une direction parallèle audit axe central (X) ; et
une pluralité de pièces dentées (113) alternatives aptes à être fixées au corps principal (101) et présentant chacune une denture différente avec au moins une dent frontale (115) en saillie suivant la direction dudit axe central (X).

2. Système suivant la revendication 1, dans lequel chaque pièce dentée (113) est une bague fendue élastique.

3. Système suivant la revendication 2, dans lequel chaque pièce dentée (113) présente, en sens opposé à ladite dent frontale (115), au moins un doigt d'indexage (116) apte à coopérer avec un dégagement (118) dans le corps principal (109) de manière à bloquer la pièce dentée (113) en rotation autour de l'axe central (X) par rapport au corps principal (101).

4. Système suivant l'une quelconque des revendications 2 ou 3, dans lequel chaque pièce dentée (113) présente au moins un crochet (117) pour la retenir axialement au corps principal (101).

5. Système suivant l'une quelconque des revendications précédentes, comprenant au moins un écrou de couplage (103), ledit filetage (109) étant un filetage interne dudit écrou (103), et l'écrou (103) étant, par rapport au corps principal (101), restreint en direction sensiblement parallèle à l'axe central (X) et rotatif autour de l'axe central (X).

6. Système suivant la revendication 5, comprenant une pluralité d'écrous de couplage (103) alternatifs, présentant chacun un filetage interne différent.

7. Système suivant la revendication 5, comprenant une bague de rétention (104) pour retenir axialement l'écrou (103) par rapport au corps principal (101).

8. Système suivant l'une quelconque des revendications précédentes, comprenant en outre un collier de serrage (140) pour la fixation du raccord modulaire (100) sur un câble (200).

9. Système suivant la revendication 8, dans lequel le collier de serrage (140) comprend un organe pivotant (122) avec une première extrémité (122a) reliée au corps principal (101) par une articulation permettant son pivotement par rapport au corps principal (101), et un dispositif (125) pour fixer une deuxième extrémité (122b) de l'organe pivotant (122) au corps principal (101) après serrage du collier (140).

10. Système suivant la revendication 9, comprenant en outre une bande (133), en matériau plus souple que l'organe pivotant (122), solidaire d'une surface interne (130) de l'organe pivotant (122) sur une longueur (l), et présentant, entre cette longueur (l) et une extrémité (133a) de la bande (133), au moins un marquage (134) correspondant à un diamètre de serrage prédéterminé.

11. Procédé d'assemblage d'un raccord modulaire (100) à partir d'un système suivant l'une quelconque des revendications précédentes, dans lequel une pièce dentée (113) est sélectionnée, parmi la pluralité de pièces dentées alternatives présentant des dents frontales (115) différentes, pour être complémentaire d'une denture frontale (301) d'un autre raccord (300) auquel le raccord modulaire (100) doit être connecté, avant d'être fixée au corps principal (101).

12. Procédé d'assemblage d'un raccord modulaire (100) suivant la revendication 11, comprenant en outre une étape de sélection d'un écrou de couplage (103) présentant un filetage (109) interne complémentaire d'un filetage externe (302) de l'autre raccord (300), parmi une pluralité d'écrous alternatifs présentant des filetages (109) différents, et une étape de montage de l'écrou (103) sélectionné sur le corps principal (101).

## Patentansprüche

1. System für die Montage eines modularen Steckverbinder (100) das system umfassend :
einem Hauptkörper (101) und
einem Gewinde (109) um eine zentrale Achse (X), mit eingeschränkter Verschiebung in Bezug auf den Hauptkörper (101) mindestens in einer Richtung parallel zur zentralen Achse (X), und
**dadurch gekennzeichnet, dass** dieses außerdem umfasst:
eine Vielzahl von alternativen Zahnelementen (113), die geeignet sind, am Hauptkörper (101) befestigt zu werden und jeweils eine unterschiedliche Zahnung mit mindestens einem vorderen Zahn (115) aufweisen, der in der Richtung der zentralen Achse (X) vorsteht.

2. System gemäß Anspruch 1, wobei jedes Zahnelement (113) ein elastischer Schlitzring ist.

3. System gemäß Anspruch 2, wobei jedes Zahnelement (113), in der Richtung entgegengesetzt zum vorderen Zahn (115), mindestens einen Indexfinger (116) aufweist, der geeignet ist, mit einer Freigabe (118) im Hauptkörper (101) zusammenzuwirken, um das Zahnelement (113) in Rotation um die zentrale Achse (X) in Bezug auf den Hauptkörper (101) zu blockieren.

4. System gemäß einem der Ansprüche 2 oder 3, wobei jedes Zahnelement (113) mindestens einen Haken (117) aufweist, um dieses axial am Hauptkörper (101) zu halten.

5. System gemäß einem der vorhergehenden Ansprüche, umfassend mindestens eine Kupplungsmutter (103), wobei das Gewinde (109) ein Innengewinde der Mutter (103) ist, und die Mutter (103), in Bezug auf den Hauptkörper (101), in einer Richtung im Wesentlichen parallel zur zentralen Achse (X) eingeschränkt ist und um die zentrale Achse (X) drehbar ist.

6. System gemäß Anspruch 5, umfassend eine Vielzahl alternativer Kupplungsmuttern (103), die jeweils ein unterschiedliches Innengewinde aufweisen.

7. System gemäß Anspruch 5, umfassend einen Haltering (104), um die Mutter (103) in Bezug auf den Hauptkörper (101) axial zu halten.

8. System gemäß einem der vorhergehenden Ansprüche, außerdem umfassend eine Befestigungsschelle (140) zur Befestigung des modularen Steckverbinders (100) an einem Kabel (200).

9. System gemäß Anspruch 8, wobei die Befestigungsschelle (140) ein Schwenkelement (122) mit einem ersten Ende (122a), das mit dem Hauptkörper (101) durch eine Gelenkverbindung verbunden ist, die sein Schwenken in Bezug auf den Hauptkörper (101) gestattet, und eine Vorrichtung (125) zur Befestigung eines zweiten Endes (122b) des Schwenkelements (122) am Hauptkörper (101) nach der Befestigung der Schelle (140) umfasst.

10. System gemäß Anspruch 9, außerdem umfassend ein Band (133) aus einem nachgiebigeren Material als das Schwenkelement (122), das mit einer Innenfläche (130) des Schwenkelements (122) über eine Länge (l) fest verbunden ist und, zwischen dieser Länge (l) und einem Ende (133a) des Bands (133), mindestens eine Markierung (134) aufweist, die einem vorherbestimmten Befestigungsdurchmesser entspricht.

11. Verfahren zum Montieren eines modularen Steckverbinders (100) eines Systems gemäß einem der vorhergehenden Ansprüche, wobei ein Zahnelement (113) unter der Vielzahl alternativer Zahnelemente, die unterschiedliche vordere Zähne (115) aufweisen, ausgewählt wird, um komplementär zu einer vorderen Zahnung (301) eines anderen Steckverbinders (300) zu sein, mit dem der modulare Steckverbinder (100) verbunden werden muss, bevor er am Hauptkörper (101) befestigt wird.

12. Verfahren zum Montieren eines modularen Steckverbinders (100) gemäß Anspruch 11, außerdem umfassend einen Schritt des Auswählens einer Kupplungsmutter (103), die ein Innengewinde (109) komplementär zu einem Außengewinde (302) des anderen Steckverbinders (300) aufweist, unter einer Vielzahl alternativer Muttern, die unterschiedliche Gewinde (109) aufweisen, und einen Schritt des Montierens der ausgewählten Mutter (103) am Hauptkörper (101).

## Claims

1. A system for assembling a modular coupling (100), the systemcomprising:
a main body (101); and
a thread (109) about a central axis (X) with restricted freedom to move relative to said main body (101) at least in a direction parallel to said central axis (X);
the system being **characterized in that** it further comprises:
a plurality of alternative toothed parts (113) suitable for being fastened to the main body (101) and each presenting a different set of teeth with at least one front tooth (115) projecting along an axis parallel to said central axis (X).

2. A system according to claim 1, wherein each toothed part (113) is a resilient split ring.

3. A system according to claim 2, wherein each toothed part (113) presents at least one indexing tooth (116) projecting in a direction opposite to said front tooth (115) for the purpose of co-operating with a setback (118) in the main body (101) so as to block the toothed part (113) against turning about the central axis (X) relative to the main body (101).

4. A system according to claim 2, wherein each toothed part (113) presents at least one hook (117) for retaining it axially relative to the main body (101).

5. A system according to claim 1, including at least one coupling nut (103), said thread (109) being an inner thread of said nut (103), and the nut (103) being rotatable about the central axis (X) and restricted in movement relative to the main body (101) in a direction that is substantially parallel to the central axis (X).

6. A system according to claim 5, having a plurality of alternative coupling nuts (103), each presenting a different inner thread.

7. A system according to claim 5, having a retention ring (104) for retaining the nut (103) axially relative to the main body (101).

8. A system according to claim 1, further comprising a clamping collar (140) for fastening the modular coupling (100) to a cable (200).

9. A system according to claim 8, wherein the clamping collar (140) comprises a pivot member (122) with a first end (122a) connected to the main body (101) via a hinge engaging it to pivot relative to the main body (101), and a device (125) for fastening a second end (122b) of the pivot member (122) to the main body (101) after the collar (140) has been clamped.

10. A system according to claim 9, further comprising a strip (133), made of a more flexible material than the pivot member (122), the strip being secured to an inner surface (130) of the pivot member (122) over a length (λ) and presenting, between this length (λ) and an end (133a) of the strip (133), at least one mark (134) corresponding to a predetermined clamping diameter.

11. A method of assembling a modular coupling (100) from a system according to claim 1, wherein, prior to being fastened to the main body (101), a toothed part (113) is selected among the plurality of alternative toothed parts presenting different sets of front teeth (115) so as to be complementary to a set of front teeth (301) of another coupling (300) to which the modular coupling (100) is to be connected.

12. A method of assembling a modular coupling (100) according to claim 11, further including a step of selecting a coupling nut (103) from a plurality of alternative nuts presenting different inner threads (109), so as to present an inner thread (109) that is complementary to an outer thread (302) of the other coupling (300), and a step of mounting the selected nut (103) on the main body (101).
